# EUROPÄISCHE PATENTANMELDUNG

(11) **EP 1 506 900 A1**
(43) Veröffentlichungstag der Anmeldung: **16.02.2005**
(21) Anmeldenummer: 04018436.8
(22) Anmeldetag: 04.08.2004
(51) Int. Cl.: B60T 17/22

(54) **Verfahren und Vorrichtung zur Prüfung von pneumatischen und/oder hydraulischen Bremsen an Schienefahrzeugen**

(30) Priorität: 14.08.2003 DE 10337815
(71) Anmelder: RWE Power Aktiengesellschaft, 50935 Köln (DE)
(72) Erfinder: Bremer, Willi, Dipl.-Ing., 50181 Bedburg-Königshoven (DE); Buschmann, Helmut, 50181 Bedburg (DE)
(74) Vertreter: Lippert, Stachow, & Partner

(57) **Zusammenfassung**

Die Erfindung betrifft ein Verfahren zur Prüfung von pneumatischen und/oder hydraulischen Bremsen an Schienenfahrzeugen sowie eine Vorrichtung zur Prüfung solcher Bremsen an Schienenfahrzeugen. Das Verfahren umfasst das gleichzeitige Betätigen der Bremsen eines jeden Wagens bei Stillstand des Zuges auf dem Gleis, das Messen des statischen Bremsdrucks an jedem Bremszylinder, das Anzeigen der Bremsdruckdaten eines jeden Bremszylinders im Fahrerstand der Lok, das Beschleunigen des Zuges auf eine vorgewählte Prüfgeschwindigkeit unterhalb der geplanten Reisegeschwindigkeit, das Einleiten einer Vollbremsung zwecks dynamischer Bremsprüfung, das Erfassen der Geschwindigkeit des Zuges bei Einleitung des Bremsvorganges, das Erfassen des Bremsweges und das Errechnen und Anzeigen des theoretischen Bremsweges bei einer gegebenen Reisegeschwindigkeit im Fahrerstand der Lokomotive.

## Beschreibung

Bremsanlagen von Schienenfahrzeugen mit Zustandsüberwachung sind grundsätzlich bekannt, beispielsweise aus der EP 0903514 B1. Dabei geht es darum, zuverlässig festzustellen, ob die Bremse eines Schienenfahrzeugs gelöst oder offen ist.

Aus der DE 10029125 A1 ist eine Alarmeinrichtung für eine druckluftgesteuerte Bremsanlage eines Schienenfahrzeuges bekannt, mit der Fehlfunktionen der druckluftgesteuerten Bremsanlage zuverlässig erkannt werden sollen. Dabei werden Druck- und Volumenstrom in einer durch den Eisenbahnzug durchgeführten und alle Wagen des Eisenbahnzugs verbindenden Bremshauptluftleitung gemessen. Bei anormalen Druck- und/oder Luftstromwerten wird ein Alarmsignal erzeugt. Hierbei handelt es sich um eine indirekte Messmethode, die eine Unstimmigkeit im Bremssystem anzeigt, jedoch keine exakte Auskunft über deren Ursache und deren tatsächliche Auswirkung auf den Bremsweg liefert.

Die vorbeschriebenen bekannten Einrichtungen dienen allesamt dem Zweck, Fehlfunktionen von Bremseinrichtungen für Schienenfahrzeuge während des Betriebes zu detektieren. Diese Systeme ersetzen nicht die turnusmäßige Überprüfung der Bremsen im Rahmen der Wartung auf einem stationären Bremsenprüfstand. Nach festgelegten Wartungsintervallen sind gebremste Wagons bzw. gebremste Anhänger von Schienenfahrzeugen in Hinblick auf den Zustand der Bremsen eingehend zu untersuchen, beispielsweise auf einem Bremsenprüfstand, wobei einzelne Bremskomponenten nach einer bestimmten Betriebszeit oder nach Verschleißzustand auszutauschen sind.

Es ist leicht vorstellbar, dass Bremsenprüfstände für Schienenfahrzeuge verhältnismäßig viel Raum beanspruchen. Zudem sind Vorbereitung und Durchführung der Prüfung zeit- und arbeitsaufwendig. Die zur Wartung vorgesehenen Wagen müssen aus dem Zugverband herausgenommen und dem Bremsenprüfstand zugeführt werden. Hierzu wird zudem Rangiergleis benötigt.

Der Erfindung liegt daher die Aufgabe zugrunde, ein Verfahren zur Prüfung von pneumatischen und/oder hydraulischen Bremsen an Schienenfahrzeugen sowie eine Prüfeinrichtung hierfür bereitzustellen, mit denen eine verbesserte Fehlerdiagnose und insbesondere eine Verringerung des Prüfaufwands für Bremssysteme von Schienenfahrzeugen erzielt werden können.

Erfindungsgemäß wird hierzu zunächst ein Verfahren zur Prüfung von pneumatischen und/oder hydraulischen Bremsen an Schienenfahrzeugen bestehend aus wenigstens einer Lokomotive und angehängten gebremsten Wagen vorgeschlagen, welches folgende Verfahrensschritte umfasst:
- gleichzeitiges Betätigen der Bremse eines jeden Wagens bei Stillstand des Zuges auf dem Gleis;
- Messen des statischen Bremsdrucks an jedem Bremszylinder eines jeden Wagens;
- Anzeigen der Bremsdruckdaten eines jeden Bremszylinders im Fahrerstand der Lokomotive;
- Lösen der Bremsen;
- Beschleunigen des Zuges auf eine vorgewählte Prüfgeschwindigkeit unterhalb der geplanten Reisegeschwindigkeit;
- Einleiten einer Vollbremsung zwecks dynamischer Bremsprüfung;
- Erfassen der Geschwindigkeit bei Einleitung des Bremsvorgangs und
- Erfassen und Anzeigen des Bremsweges im Fahrerstand der Lokomotive.

Der genaue Bremsweg kann entweder über einen Radarsensor auf der Lokomotive, um etwaige Messfehler durch Schlupf auszuschließen, oder Wegaufnehmer an den Rädern der Lokomotive oder durch beide Systeme parallel mit gegenseitiger Plausibilitätsprüfung erfolgen.

Das Verfahren gemäß der Erfindung hat den Vorzug, dass Störungen im Bremssystem sofort vom Lokomotivführer erkannt werden, so dass dieser sein Fahrverhalten den neuen Gegebenheiten anpassen kann. Ein weiterer Vorteil ist daran zu sehen, dass die Bremsprüfung auf dem Gleis unter Betriebsbedingungen gegebenenfalls mit beladenen Wagen erfolgen kann.

Bei einer besonders bevorzugten Variante des erfindungsgemäßen Verfahrens wird aufgrund des bei Prüfgeschwindigkeit ermittelten Bremswegs ein theoretischer Bremsweg bei einer gegebenen Reisegeschwindigkeit errechnet und im Fahrerstand der Lokomotive angezeigt. Der Bremsweg für die vorgegebene Reisegeschwindigkeit wird also aufgrund des bei Prüfgeschwindigkeit ermittelten Bremswegs errechnet. Alternativ kann anhand des für eine bestimmte Fahrstrecke zulässigen Bremswegs unter Berücksichtigung von Steigung oder Gefälle eine maximal zulässige Reisegeschwindigkeit ermittelt werden. Diese Vorgehensweise hat den Vorzug, dass auch Rückschlüsse vom Bremsverhalten auf den Beladungszustand des Zuges möglich sind. Die Prüfung unter echten Bedingungen bei fahrendem Zug bei einem Bruchteil der theoretischen Reisegeschwindigkeit erlaubt es, bei möglichst sicheren Betriebsbedingungen eine Volllastbremsung bei hoher Geschwindigkeit zu simulieren. Ferner hat das erfindungsgemäße Verfahren den Vorzug, dass, da eine laufende Überprüfung im Betrieb auf dem Gleis mit hoher Diagnosezuverlässigkeit möglich ist, die Wartungsintervalle für die Bremsanlage erheblich verlängert werden können. Darüber hinaus werden Transporte zur Werkstatt und der Prüfaufwand in der Werkstatt auf ein Minimum reduziert. Beispielsweise der Austausch der Bremsventile kann aufgrund der permanenten Funktionsüberwachung bis zum tatsächlichen Ausfall derselben herausgezogen werden, diese müssen nicht mehr innerhalb der gesetzlich vorgegebenen Wartungsintervalle ausgetauscht werden.

Vorzugsweise erfolgt die Beschleunigung des Zuges zwecks dynamischer Bremsprüfung erst, wenn der statische Bremsdruck eines jeden Bremszylinders beim Betätigen der Bremsen bei Stillstand des Zuges einen vorgegebenen Sollwert erreicht hat.

Vorzugsweise wird nach dem Einleiten der Vollbremsung erneut der statische Druck eines jeden Bremszylinders abgefragt und erfasst, so dass auch Bremsdruckwerte für die betreffenden Bremszylinder bei Bremsung unter Last vorliegen.

Besonders vorteilhaft ist es, wenn bei Vollbremsung für jeden Bremszylinder die Abweichung des Bremszylinderdrucks vom Sollwert gespeichert und in einem Zähler aufaddiert wird. So kann für jeden gebremsten Wagen über dessen gesamte Einsatzzeit ein Bremsdruckwertprotokoll erstellt werden. Nachlassende Bremsleistung kann rechtzeitig erkannt werden. Die so erfassten und protokollierten Werte sind auch hilfreich für die Fehlerdiagnose. Es kann zuverlässig bestimmt werden, ob bestimmte Abweichungen vom Sollwert kontinuierlich oder sprunghaft aufgetreten sind.

Es ist weiterhin zweckmäßig, bei der dynamischen Bremsprüfung die für den Druckaufbau in jedem Bremszylinder benötigte Zeit (Ansprechzeit) erfasst wird. Auch diese Daten werden protokolliert und ermöglichen ohne weiteres Rückschlüsse auf die Wartungsbedürftigkeit einzelner Bestandteile der Bremsanlage.

Zur Überprüfung der Ansprechzeit der Bremsventile wird zweckmäßigerweise eine erneute Abfrage des statischen Drucks eines jeden Bremszylinders zu einem definierten Zeitpunkt nach der Einleitung der Vollbremsung vorgenommen, so dass aus dem zu diesem Zeitpunkt erfolgten Druckaufbau Rückschlüsse auf das Ansprechverhalten eines jeden Bremsventils getroffen werden können. Beispielsweise wird der statische Druck der Bremszylinder etwa zwei Sekunden nach Einleitung der Vollbremsung abgefragt.

Vorteilhaft ist es, wenn die dynamische Bremsprüfung bei sicherheitsrelevanten Zwangsbremsungen, die beispielsweise aufgrund von magnetischer Zugüberwachung ausgelöst werden, automatisch eingeleitet wird.

Die von der Erfindung weiterhin vorgeschlagene Prüfeinrichtung für pneumatische und/oder hydraulische Bremsanlagen von Schienenfahrzeugen umfasst wenigstens eine zentrale Datenverarbeitungseinheit zur Bremsdatenerfassung und -auswertung wenigstens eine jedem Wagen eines aus Lokomotive und Wagen bestehenden Zuges fest zugeordneter Wagen-Datenverarbeitungseinrichtung, wenigstens eine jeder Wagenbremse fest zugeordnete Bremszustandsüberwachungseinrichtung zur Aufnahme des jeweiligen Bremsdrucks und wenigstens eine zentrale Anzeige- und/oder Ausgabeeinrichtung zur Ausgabe von Bremsdruckwerten, wobei die Wagen-Datenverarbeitungseinrichtung über einen Datenbus mit der zentralen Datenverarbeitungseinrichtung, die Bremszustandsüberwachungseinrichtungen mit der jeweiligen Wagen-Datenverarbeitungseinrichtung und die Anzeige- und/oder Ausgabeeinrichtung mit der zentralen Datenverarbeitungseinrichtung verbunden ist.

Mit anderen Worten, jeder Wagen des Zuges ist mit einer eigenen Wagen-Datenverarbeitungseinrichtung versehen. Die Wagen-Datenverarbeitungseinrichtungen sind über ein Datenbussystem an eine zentrale Datenverarbeitungseinrichtung auf der Lokomotive angeschlossen. Im Fahrerstand der Lokomotive ist weiterhin wenigstens eine Anzeigeeinrichtung vorgesehen, mit der alle sicherheitsrelevanten Daten des Bremssystems dem Lokomotivführer angezeigt werden können, so dass der Lokomotivführer eine Bremsprüfung für die Bremszylinder eines jeden einzelnen Wagens auf der Lokomotive auf dem Gleis unter normalen Beladungsbedingungen durchführen kann.

Die Wagen-Datenverarbeitungseinrichtungen können jeweils zur Speicherung und Ausgabe der wagen-spezifischen Bremszustandsdaten ausgebildet sein. Auf diese Art und Weise ist jeder Wagen des Zuges mit einem eigenen "Diagnosespeicher" versehen. Die Bremsdaten können entweder an jedem Wagen oder zentral im Fahrerstand der Lokomotive abgerufen werden. Auf diese Art und Weise ist es auch möglich, die Wagen eines Zuges unter Wartungsgesichtspunkten zusammenzustellen.

Vorzugsweise ist eine Bremswegerfassungseinrichtung vorgesehen, die an die zentrale Datenverarbeitungseinheit angeschlossen ist. Als Bremswegerfassungseinrichtung können entweder ein Radarsensor oder auch Wegaufnehmer an den Rädern der Lokomotive vorgesehen sein. Im letzteren Fall müssen mehrere auf Plausibilität überprüfbare Wegaufnehmer vorgesehen sein, um zuverlässig etwaigen Schlupf der Räder der Lokomotive herausrechnen zu können.

Als Bremszustandsüberwachungseinrichtungen sind zweckmäßigerweise an jedem Bremszylinder Analogwertaufnehmer für den Bremsdruck vorgesehen. Wie eingangs bereits erwähnt wurde, wird von einer pneumatischen Bremsanlage mit zentraler Druckerzeugung für Schienenfahrzeuge ausgegangen, die Erfindung ist aber genauso gut auch auf hydraulische Bremsanlagen anwendbar.

Bevorzugt wird als Bremswegerfassungseinrichtung ein Radarwellenwegmesser.

Die Anzeige- und Auswertereinrichtung ist zweckmäßigerweise im Steuerstand der Lokomotive angeordnet.

Im Folgenden wird ein Ausführungsbeispiel beschrieben.

Die erfindungsgemäße Vorrichtung wird danach an einem Kohlezug mit Lokomotive und mehreren gebremsten Wagons verwirklicht. Die Wagons sind als offene Kohlewagen mit einem Leergewicht von 35 t und einem Vollgewicht von 140 t ausgebildet. Jeder Wagen ist mit einem Wagonrechner versehen, die einzelnen Wagonrechner sind über einen Zug-Datenbus mit einem Rechner der Wagensteuerung auf der Lokomotive verbunden. Dieser Rechner der Wagensteuerung auf der Lokomotive dient als Schnittstelle zu der Datenverarbeitungseinrichtung der Lokomotive. Der Zug ist mit einer pneumatischen Zugbremse versehen, auf der Lokomotive wird zentral die Druckluft erzeugt, die über eine Druckluftleitung einem auf jedem Wagen vorgesehenen Druckluftspeicher zugeführt wird. Der Druckluftspeicher ist über ein Bremsventil an den Bremszylinder angeschlossen, der wiederum einen auf das Rad des Wagens wirkenden Bremsklotz betätigt.

Jedem Bremszylinder ist ein Analogwertdruckaufnehmer zugeordnet, über den der Druck des jeweiligen Bremszylinders gemessen und dem jeweiligen Wagonrechner zugeführt und dort verarbeitet wird. Bei Abweichungen des statischen Drucks bei Vollbremsungen werden diese Fehler gespeichert und in hierfür vorgesehenen Zählern aufaddiert. Die Maximal- und Minimalwerte für den Bremszylinderdruck eines jeden Bremszylinders werden ebenfalls gespeichert, so dass die Fehlerhäufigkeit und Fehlergröße für jeden Wagon festgehalten und später bewertet werden kann. An dem Wagonrechner lassen sich unmittelbar die Diagnosedaten auslesen, diese können allerdings auch über Datenbus in die Lokomotive übertragen werden. Dort wird der Bremszylinderdruck eines jeden Bremszylinders gespeichert und in einem hierfür vorgesehenen Zähler aufaddiert. An dem Wagonrechner lassen sich unmittelbar die Anzahl der Bremsvorgänge sowie die jeweiligen Bremszylinderdruckwerte auslesen, diese können allerdings auch über den Rechner der Lokomotive via Datenbus abgefragt werden. Der Lokomotivführer hat hierzu im Fahrerstand eine Anzeige für die Bremsdaten eines jeden Bremszylinders. Vor Antritt der Fahrt wird im Stillstand des Zuges eine Vollbremsung durchgeführt. Hierbei wird überprüft, ob die statischen Bremszylinderdrücke im vorgegebenen Toleranzband eingehalten werden. Sind die statischen Drücke in Ordnung, wird von dem Prüfsystem die Freigabe für eine automatische und dynamische Bremsprobe erteilt. Hierzu wird der Zug auf beispielsweise 10 h/km beschleunigt. Ist die vorgegebene Geschwindigkeit für die dynamische Bremsprobe, im vorliegenden Fall 10 h/km, erreicht, wird eine weitere Vollbremsung eingeleitet. Dabei werden folgende bremswegrelevante Daten erfasst, gespeichert und dem Lokomotivführer angezeigt:
- der genaue Bremsweg, erfasst über einen Radarsensor auf der Lokomotive,
- die Geschwindigkeit bei Einleitung des Bremsvorgangs (Ist-Geschwindigkeit),
- die Bremsdruckwerte eines jeden Wagenbremszylinders für den aktuellen Bremsvorgang, und zwar gemessen zwei Sekunden nach Einleitung des Bremsvorgangs und bei Stillstand des Zuges.

Um unterschiedlichen Beladungszuständen des Zuges Rechnung zu tragen, können unterschiedliche Bremsdrucksollwerte für unterschiedliche Beladungszustände des Zuges vorgegeben werden, beispielsweise ein Bremsdrucksollwert von 4,1 bar für den beladenen Zug sowie ein Bremsdrucksollwert von 1,25 bar für den nicht beladenen Zug.

Als zusätzliche Maßnahme kann nach Durchführung der dynamischen Bremsprobe, wie vorstehend beschrieben, nochmals der statische Enddruck eines jeden Bremszylinders im Fahrerstand der Lokomotive angezeigt werden.

## Patentansprüche

1. Verfahren zur Prüfung von pneumatischen und/oder hydraulischen Bremsen an Schienenfahrzeugen bestehend aus wenigstens einer Lokomotive und angehängten, gebremsten Wagen, folgende Verfahrensschritte umfassend:
- gleichzeitiges Betätigen der Bremsen eines jeden Wagens bei Stillstand des Zuges auf dem Gleis;
- Messen des statischen Bremsdrucks an jedem Bremszylinder;
- Anzeigen der Bremsdruckdaten jedes Bremszylinders im Fahrerstand der Lokomotive;
- Lösen der Bremsen;
- Beschleunigen des Zuges auf eine vorgewählte Prüfgeschwindigkeit unterhalb der geplanten Reisegeschwindigkeit;
- Einleiten einer Vollbremsung zwecks dynamischer Bremsprüfung;
- Erfassen der Geschwindigkeit bei Einleitung des Bremsvorgangs und
- Erfassen und Anzeigen des Bremsweges im Fahrerstand der Lokomotive.

2. Verfahren nach Anspruch 1, **gekennzeichnet durch** das Errechnen und Anzeigen eines theoretischen Bremsweges im Fahrerstand der Lokomotive bei einer gegebenen Reisegeschwindigkeit aufgrund des bei Prüfgeschwindigkeit ermittelten Bremsweges.

3. Verfahren nach Anspruch 2, **gekennzeichnet durch** das Errechnen und Anzeigen der zulässigen Reisegeschwindigkeit des Zuges im Fahrerstand der Lokomotive in Abhängigkeit von dem theoretisch ermittelten Bremsweg.

4. Verfahren nach einem der Ansprüche 1 bis 3, **dadurch gekennzeichnet, dass** die Beschleunigung des Zuges zwecks dynamischer Bremsprobe erst eingeleitet wird, wenn der statische Bremsdruck eines jeden Bremszylinders bei Stillstand des Zuges einen vorgegeben Sollwert erreicht hat.

5. Verfahren nach einem der Ansprüche 1 bis 4, **dadurch gekennzeichnet, dass** nach dem Einleiten der Vollbremsung erneut der statische Druck eines jeden Bremszylinders abgefragt und erfasst wird.

6. Verfahren nach einem der Ansprüche 1 bis 5, **dadurch gekennzeichnet, dass** bei Vollbremsung für jeden Bremszylinder die Abweichung des Bremszylinderdrucks vom Sollwert für den betreffenden Zylinder gespeichert und in einem Zähler aufaddiert wird.

7. Verfahren nach einem der Ansprüche 1 bis 6, **dadurch gekennzeichnet, dass** bei der dynamischen Bremsprüfung die für den Druckaufbau in jedem Bremszylinder benötigte Zeit (Ansprechzeit) erfasst wird.

8. Verfahren nach Anspruch 6, **dadurch gekennzeichnet, dass** die erneute Abfrage des statischen Drucks eines jeden Bremsventils zu einem definierten Zeitpunkt nach Einleitung der Vollbremsung erfolgt, so dass aus dem zu diesem Zeitpunkt erfolgten Druckaufbau Rückschlüsse auf das Ansprechverhalten eines jeden Bremsventils getroffen werden können.

9. Verfahren nach einem der Ansprüche 1 bis 8, **dadurch gekennzeichnet, dass** die dynamische Bremsprüfung bei sicherheitsrelevanten Zwangsbremsungen automatisch eingeleitet wird.

10. Prüfeinrichtung für pneumatische und/oder hydraulische Bremsanlagen von Schienenfahrzeugen umfassend wenigstens eine zentrale Datenverarbeitungseinheit zur Bremsdatenerfassung und -auswertung, wenigstens eine an jedem Wagen eines aus Lokomotive und Wagen bestehenden Zuges fest zugeordnete Wagen-Datenverarbeitungseinrichtung, wenigstens eine jeder Wagenbremse fest zugeordnete Bremszustandsüberwachungseinrichtung zur Aufnahme des jeweiligen Bremsdrucks und wenigstens eine zentrale Anzeige- und/oder Ausgabeeinrichtung zur Anzeige und Ausgabe von Bremsdruckswerten, wobei die Wagen-Datenverarbeitungseinrichtung über einen Datenbus mit der zentralen Datenverarbeitungseinrichtung, die Bremszustandsüberwachungseinrichtung mit der jeweiligen Wagen-Datenverarbeitungseinrichtung und die Anzeigeund/oder Ausgabeeinrichtung mit der zentralen Datenverarbeitungseinrichtung verbunden ist.

11. Steuer- und Überwachungseinrichtung nach Anspruch 10, **dadurch gekennzeichnet, dass** die Wagen-Datenverarbeitungseinrichtung jeweils zur Speicherung und Ausgabe der wagen-spezifischen Bremszustandsdaten ausgebildet sind.

12. Steuer- und Überwachungseinrichtung nach einem der Ansprüche 10 oder 11, **dadurch gekennzeichnet, dass** eine Bremswegerfassungseinrichtung vorgesehen ist, die an die zentrale Datenverarbeitungseinheit angeschlossen ist.

13. Steuer- und Überwachungseinrichtung nach Anspruch 10, **dadurch gekennzeichnet, dass** als Bremszustandsüberwachungseinrichtung an jedem Bremszylinder Analogwertaufnehmer für den Bremsdruck vorgesehen sind.

14. Steuer- und Überwachungseinrichtung nach Anspruch 12, **dadurch gekennzeichnet, dass** als Bremswegerfassungseinrichtung wenigstens ein Radarwellenwegmesser vorgesehen ist.

15. Prüfeinrichtung nach einem der Ansprüche 10 bis 13, **dadurch gekennzeichnet, dass** die Anzeigeund Ausgabeeinrichtung im Steuerstand der Lokomotive angeordnet ist.
